# EUROPEAN PATENT SPECIFICATION

(11) **EP 2 505 472 B1**
(45) Date of publication and mention of the grant of the patent: **14.05.2014**
(21) Application number: 12161070.3
(22) Date of filing: 23.03.2012
(51) Int. Cl.: B62K 23/04

(54) **Accelerator-opening-degree detection device for vehicle**
Erkennungsvorrichtung für den Grad der Beschleunigeröffnung für ein Fahrzeug
Dispositif de détection de degré d'ouverture d'accélérateur pour véhicule

(30) Priority: 28.03.2011 JP 2011071112
(43) Date of publication of application: 03.10.2012
(73) Proprietor: Keihin Corporation, Tokyo 163-0539 (JP)
(72) Inventor: Akabane, Akira, Kakuda, Kakuda-shi Miyagi (JP)
(74) Representative: Trossin, Hans-Jürgen

(56) References cited:
- US-A1- 2004 226 397
- US-B1- 6 295 891

## Description

### BACKGROUND OF THE INTENTION

### FIELD OF TFIE INTENTION

The present invention relates to an improvement of an accelerator-opening-degree detection device for a vehicle, including: a sensor case fixed to a bar-shaped steering handle; a rotor arranged adjacent to the sensor case, the rotor being coupled with an accelerator grip rotatably provided to the steering handle; an accelerator-opening-degree sensor accommodated and held in the sensor case, the accelerator-opening-degree sensor configured to detect a rotation angle from an initial position of the rotor; and a return spring connected to and between the sensor case and the rotor, the return spring configured to urge the rotor toward the initial position

### DESCRIPTION OF THE RELATED ART

Such an accelerator-opening-degree detection device for a vehicle is already known as disclosed in Japanese Patent Application Laid-open No. 2004-339945. In the accelerator-opening-degree detection device for a vehicle, upon detection of an opening degree of the accelerator grip, the accelerator-opening-degree sensor outputs a detection signal corresponding to the opening degree to an electronic control unit of a vehicle. In response to the signal, the electronic control unit controls electric throttle valve of an engine, fuel injection amount of fuel injection valve, and ignition timing of ignition device.

### SUMMARY OF THE INVENTION

Meanwhile, in order to obtain a favorable feeling of operating the accelerator grip, the accelerator-opening-degree detection device for a vehicle is required to generate a hysteresis in operation load, making a difference in operation load between an opening operation and a closing operation of the accelerator grip. Hence, the accelerator-opening-degree detection device for a vehicle described in Japanese Patent Application Laid-open No. 2004-339945 uses a spiral spring as a return spring configured to urge a rotor in a closing direction of the accelerator grip. With the rotation of the accelerator grip in an opening direction to wind up the spiral spring, portions of a resilient belt-shaped plate of the spiral spring come into friction contact with each other, which generates the hysteresis in operation load as described above due to friction resistance.

Since the return spring itself provides the hysteresis characteristic in such an accelerator-opening-degree detection device, special-hysteresis-generation-means is not needed for generating the hysteresis characteristic, and the structure of the accelerator-opening-degree detection device could be simplified.

However, at or near a fully-closed position of the accelerator grip, the spiral spring is in an expanded state in which no portions of the resilient belt-shaped plate are in contact with each other. For this reason, desired hysteresis characteristic cannot be obtained. Thus, obtaining a favorable acceleration operation feeling at any position over the entire operating range of the accelerator grip is difficult.

The present invention has been made in view of these circumstances. An object thereof is to provide a simple-structure accelerator-opening-degree detection device for a vehicle by which a favorable acceleration operation feeling can be obtained over the entire operating range in an accelerator grip while special-hysteresis-generation-means is not provided.

In order to achieve the object, according to a first feature of the present invention, there is provided an accelerator-opening-degree detection device for a vehicle, including: a sensor case fixed to a bar-shaped steering handle; a rotor arranged adjacent to the sensor case, the rotor being coupled with an accelerator grip rotatably provided to the steering handle; an accelerator-opening-degree sensor accommodated and held in the sensor case, the accelerator-opening-degree sensor configured to detect a rotation angle from an initial position of the rotor; and a return spring connected to and between the sensor case and the rotor, the return spring configured to urge the rotor toward the initial position, **characterized in that** an annular spring-accommodating groove surrounding the steering handle is formed in the sensor case, a spiral spring formed by winding a resilient belt-shaped plate a plurality of times is accommodated in the spring-accommodating groove, and in order to form the return spring by the spiral spring, an end of the spiral spring on an outer periphery and an end thereof on an inner periphery are respectively locked with the sensor case and the rotor, and a narrow portion is provided in the spring-accommodating groove, the resilient belt-shaped plate of the spiral spring being held in the narrow portion in a state where portions of the resilient belt-shaped plate in the narrow portion are stacked to be always in slidable contact with each other.

According to the present invention, in the narrow portion of the spring-accommodating groove formed in the sensor case, the spiral spring is held in a state where portions of the resilient belt-shaped plates are stacked to be always in sliding contact with each other. Thus, wherever the accelerator grip angle is set in the operating range from a fully-closed position to a fully-opened position, friction resistance by the spiral spring is generated in the narrow portion of the spring-accommodating groove. Thereby, a difference in operation load between an opening operation and a closing operation of the accelerator grip is obtained as the hysteresis characteristic, which can always provide a favorable operation feeling of the accelerator grip. Moreover, since the hysteresis characteristic can be obtained in this manner with the spiral spring itself forming the return spring, there is no need for special-hysteresis-generation-means, and the structure of the accelerator-opening-degree detection device can be simplified.

Further, according to a preferred feature of the present invention, in addition to the first feature, the accelerator-opening-degree sensor is arranged inward of the spiral spring in a radial direction thereof.

According to the preferred feature of the present invention, the accelerator-opening-degree sensor is arranged inward of the spiral spring in the radial direction thereof. Thereby, the sensor case and further the accelerator-opening-degree detection device can be made compact.

Further, according to a feature not being part of the present invention, there is provided an accelerator-opening-degree detection device for a vehicle, including: a sensor case fixed to a bar-shaped steering handle; a rotor arranged adjacent to the sensor case, the rotor being coupled with an accelerator grip rotatably provided to the steering handle; an accelerator-opening-degree sensor accommodated and held in the sensor case, the accelerator-opening-degree sensor configured to detect a rotation angle from an initial position of the rotor; and a return spring connected to and between the sensor case and the rotor, the return spring configured to urge the rotor toward the initial position, **characterized in that** an arc-shaped spring-accommodating groove having one end face serving as a fixed spring seat is formed in the sensor case, a movable spring seat protruding into the spring-accommodating groove and being capable of rotationally moving in the spring-accommodating groove is formed in the rotor, the return spring is formed by a wave spring or a coil spring which is provided in a compressed state in the spring-accommodating groove while opposite ends of the wave spring or the coil spring are supported by the fixed spring seat and the movable spring seat, respectively, and the wave spring or the coil spring is always in pressure contact with an inner surface of the spring-accommodating groove.

According to this feature, the return spring formed by the wave spring or the coil spring is always in pressure contact with the inner surface of the arc-shaped spring-accommodating groove of the sensor case. Thus, when the wave spring or the coil spring is compressed or expanded in accordance with the opening or closing operation of the accelerator grip, friction resistance is generated between the wave spring or the coil spring and the inner surface of the arc-shaped spring-accommodating groove. Thereby, a difference in operation load between the opening operation and the closing operation of the accelerator grip is obtained as the hysteresis characteristic, which can always provide a favorable feeling in operating the accelerator grip. In addition, since the hysteresis characteristic can be obtained with the wave spring or the coil spring itself which forms the return spring, there is no need for special-hysteresis-generation-means, and the structure of the accelerator-opening-degree detection device can be simplified.

Further, according to a preferred feature of the present invention, in addition to any one of the other preferred features, the rotor comprises a flange closing an opening end of the sensor case, a case cover is formed by a holding wall and an outer tube, an outer side surface of the flange being held by the holding wall, the outer tube continuously provided to an outer peripheral end of the holding wall and fitted on an outer peripheral surface of the sensor case, and locking portions to be snapped into engagement with each other to couple the case cover and the sensor case together are provided to the outer tube and the sensor case, respectively.

According to the preferred feature of the present invention, the accelerator-opening-degree detection device formed in such a manner that the rotor is rotatably accommodated in the inner space between the sensor case and the case cover can be formed into an assembly. Thus, the accelerator-opening-degree detection device can be attached to the steering handle at a time.

Further, according to another preferred feature of the present invention, in addition to any one of the other preferred features, a switch case is fitted to the steering handle to be adjacent to an inner end side of the accelerator grip, and is divided into a pair of case halves along a radial direction of the steering handle, the case halves are bolted together and fixedly attached to the steering handle, the sensor case and the rotor are accommodated in the switch case, and a positioning protrusion and a positioning hole which are engaged with each other to hinder the sensor case from rotating are provided to the sensor case and the switch case, respectively.

According to another preferred feature of the present invention, since the accelerator-opening-degree detection device is accommodated in the switch case fixedly attached to the steering handle, damage to the accelerator-opening-degree detection device due to contact with another object can be prevented. In addition, since the switch case is divided into the pair of case halves along the radial direction of the steering handle, the accommodating of the accelerator-opening-degree detection device in the switch case can be performed easily. Moreover, the positioning protrusion and the positioning hole respectively formed on the sensor case and in the switching case are engaged with each other to hinder the sensor case from rotating. Thus, the rotation prevention of the sensor case can be easily performed.

The above and other objects, characteristics and advantages of the present invention will be clear from detailed descriptions of the preferred embodiments which will be provided below while referring to the attached drawings.

### BRIEF DESCRIPTION OF THE DRAWINGS

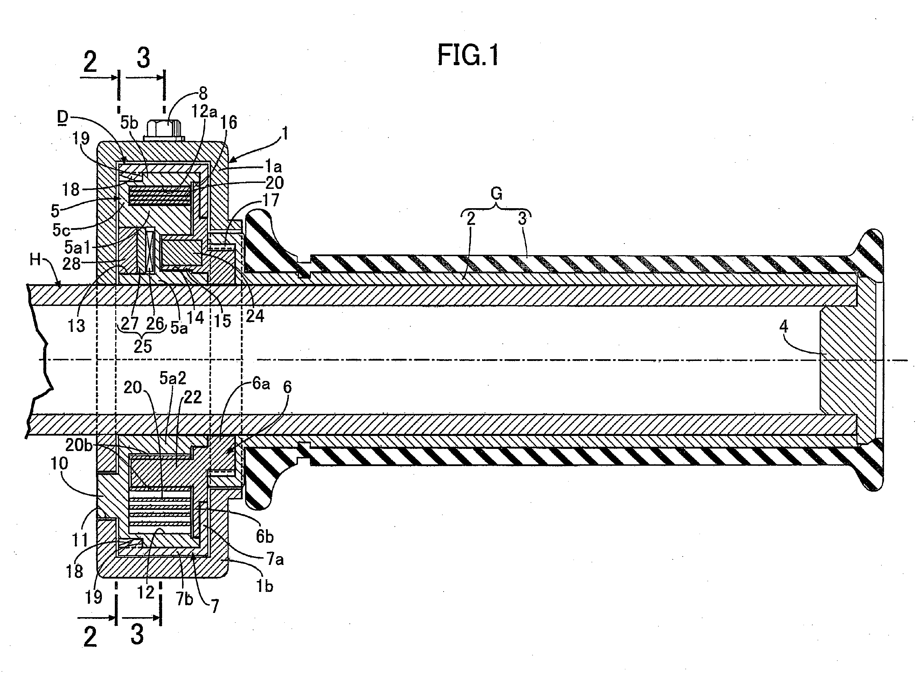

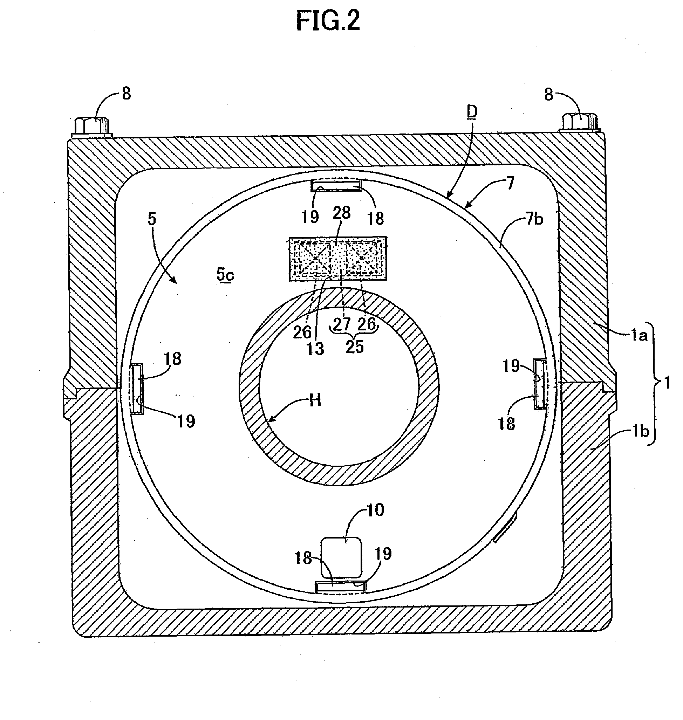

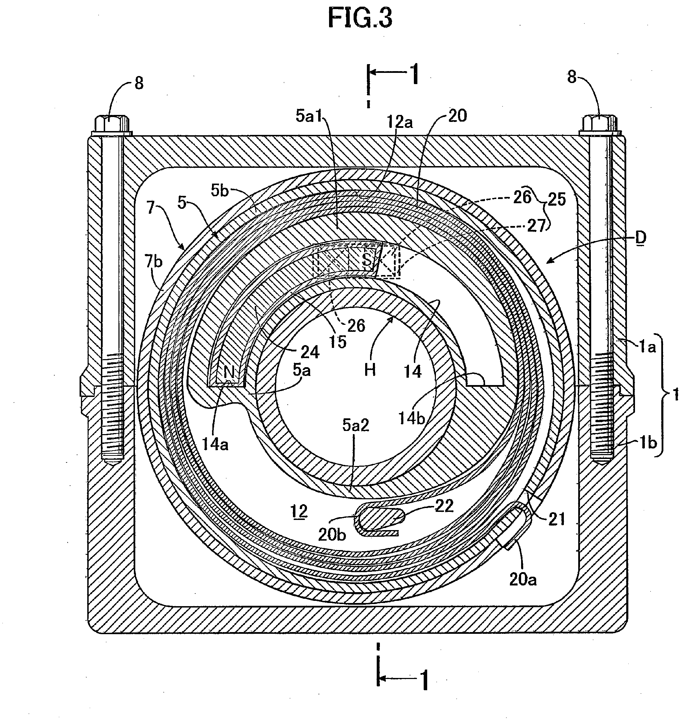

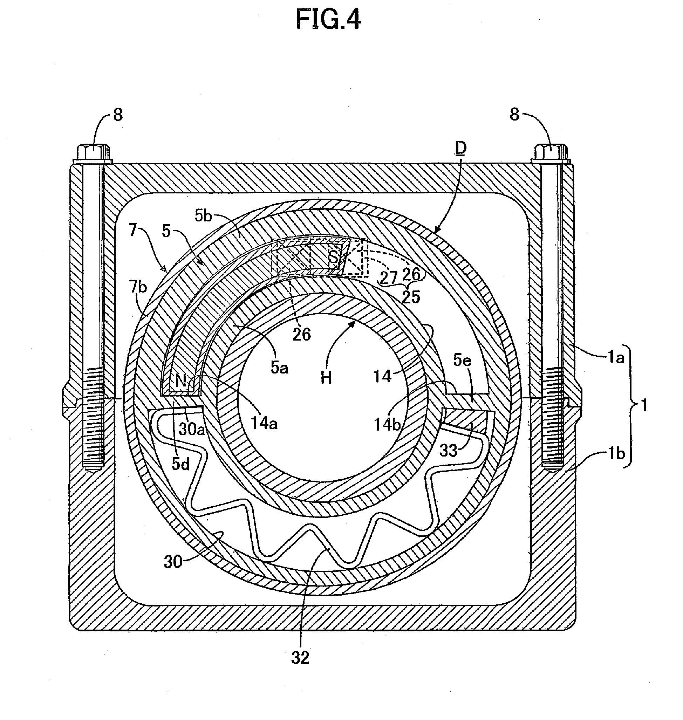

FIG. 1 is a longitudinal cross-sectional view (a sectional view taken along a line 1-1 in FIG. 3) of an accelerator-opening-degree detection device according to a first embodiment of the present invention; FIG. 2 is a sectional view taken along a line 2-2 in FIG. 1; FIG. 3 is a sectional view taken along a line 3-3 in FIG. 1; and FIG. 4 is a view corresponding to FIG. 3 that shows an embodiment not being part of the present invention.

### DESCRIPTION OF PREFERRED EMBODIMENTS

Descriptions will be hereinbelow provided for embodiments of the present invention based on the attached drawings.

First, a first embodiment of the present invention shown in FIG. 1 to FIG. 3 will be described below.

In FIG. 1, an accelerator grip G and a switch case 1 are attached to a right end portion of a bar-shaped steering handle H of a two-wheeled motor vehicle, the switch case 1 being adjacent to an inner end of this accelerator grip G. Various switches such as a starter switch and an engine kill switch are attached to the switch case 1, although the switches are not illustrated. The accelerator grip G includes a grip pipe 2 rotatably fitted on the steering handle H and a grip rubber 3 attached to an outer periphery of the grip pipe 2. A closure body 4 for preventing the grip pipe 2 from coming off the steering handle H is pressed to fit into an outer end of the steering handle H.

In FIGS. 1 to 3, the switch case 1 comprises an upper case half 1a and a lower case half 1b obtained by dividing in a diameter direction of the steering handle H. Both the upper and lower case halves 1a, 1b are mutually coupled by using bolts 8, 8 to sandwich the steering handle H and are thereby fixed to the steering handle H. An accelerator-opening-degree detection device D is provided inside the switch case 1, the accelerator-opening-degree detection device D being configured to detect a rotation angle of the accelerator grip G, that is, a degree of accelerator opening when the accelerator grip G is rotated from a fully-closed position toward a fully-opened position.

The accelerator-opening-degree detection device D includes: a sensor case 5; a rotor 6 connected to the grip pipe 2 and rotatably supported by the sensor case 5; and a case cover 7 connecting the sensor case 5 and the rotor 6 together while allowing rotation of the rotor 6. The sensor case 5, the rotor 6, and the case cover 7 are all made of a synthesis resin.

The sensor case 5 is formed by integrally molding: a cylindrical hub 5a whose inner periphery is fitted on an outer periphery of the steering handle H; a cylindrical case tube 5b which concentrically surrounds the hub 5a; and a side wall 5c integrally connecting an end portion of the hub 5a and an end portion of the case tube 5b together. A positioning protrusion 10 is integrally provided on an outer surface of the side wall 5c in such a manner as to protrude therefrom. Fitting the positioning protrusion 10 in a positioning hole 11 provided in the switch case 1 prevents the sensor case 5 from rotating around the steering handle H.

As shown in FIG. 3, an annular spring-accommodating groove 12 is defined between the hub 5a and the case tube 5b surrounding the hub 5a. A thick portion 5a1 is formed on the hub 5a on one substantially half peripheral side, while a thin portion 5a2 thinner than the thick portion 5a1 is formed on the other substantially half peripheral side. The thick portion 5a1 is formed in such a manner that the thickness thereof is increased toward the center portion, of the thick portion 5a1, in a peripheral direction. The spring-accommodating groove 12 has a narrow portion 12a having the narrowest groove width due to the center portion, of the thick portion 5a1, in the peripheral direction.

A recessed portion 13 for sensor attachment is provided in an end face, of the thick portion 5a1, on an opposite side from the rotor 6, while a guide groove 14 which is concentric with the steering handle H and extending almost 180 degrees is provided in an end face, of the thick portion 5a1, on the rotor 6 side.

As shown in FIG. 1, the rotor 6 is formed by integrally molding: a hub 6a having an inner peripheral surface which has a step and is rotatably fitted on the outer peripheral surfaces of the steering handle H and the hub 5a; and a flange 6b extending from the hub 6a in a radial direction thereof. An arc-shaped movable protrusion 15 capable of rotationally moving in the guide groove 14 is integrally provided on an inner side surface of the flange 6b in a projecting manner. The flange 6b is rotatably engaged with an annular positioning step portion 16 formed on an opening end portion of the case tube 5b, thereby closing an opening end of the case tube 5b. An inner end portion of the grip pipe 2 is loosely fitted to the outer periphery of the hub 6a with a spline 17 placed in between. Thus, rotation of the accelerator grip G can be transmitted to the rotor 6 with an appropriate play.

The rotation angle, of the rotor 6, which defines the rotation angle between the fully-closed position of the accelerator grip G and the fully-opened position thereof is limited to a range from a contact position between the movable protrusion 15 of the rotor 6 and one inner end face 14a of the guide groove 14 of the sensor case 5 to a contact position between the movable protrusion 15 and the other inner end face 14b. An illustrated example shows the rotation angle of a slightly smaller than 90 degrees.

The case cover 7 is formed by integrally molding: a holding wall 7a in contact with an outer side surface of the flange 6b; and an outer tube 7b extending to form a cylindrical shape from an outer peripheral end of the holding wall 7a and fitted on an outer peripheral surface of the sensor case 5. The outer tube 7b has multiple locking claws 18 in a tip end portion of the outer tube 7b. The locking claws 18 protrude inward in a radial direction of the outer tube 7b and are arranged in a peripheral direction thereof. The locking claws 18 are snapped into engagement with multiple locking recess portions 19 formed in the outer periphery of the sensor case 5, and thereby the case cover 7 is fixed onto the sensor case 5. In this state, the holding wall 7a of the case cover 7 does not hinder the rotation of the flange 6b of the rotor 6.

The annular spring-accommodating groove 12 accommodates a spiral spring 20 formed by coiling a resilient belt-shaped plate multiple times. The spiral spring 20 is held in the narrow portion 12a in a state where multiple portions of the resilient belt-shaped plate are stacked to slidingly contact with each other.

The spiral spring 20 includes a fixing hook 20a on an end thereof on an outer periphery and a movable hook 20b on an end thereof on an inner periphery. The fixing hook 20a is engaged with an engaging hole 21 provided in the case tube 5b of the sensor case 5. The movable hook 20b is engaged with an engaging protrusion 22 protruding from the inner side surface of the flange 6b of the rotor 6. In the engaging, setting load in an extension direction is provided to the spiral spring 20 to urge the rotor 6 in the closing direction of the accelerator grip G, so that the spiral spring 20 serves as a return spring. Thus, the spiral spring 20 is designed to be wound up when the accelerator grip G is rotated in the opening direction.

A magnet 24 is embedded in the movable protrusion 15 of the rotor 6 by insertion molding. While an accelerator-opening-degree sensor 25 by which a rotation angle of the magnet 24 rotating together with the rotor 6 is detected as an opening degree of the accelerator grip G is accommodated in the recessed portion 13 for sensor attachment of the sensor case 5, a sealing resin 28 for fixing the accelerator-opening-degree sensor 25 is filled into the recessed portion 13 for sensor attachment. The accelerator-opening-degree sensor 25 includes hall elements 26, 26 and a sensor circuit board 27 configured to convert output voltages from the hall elements 26, 26 into acceleration-opening-degree signals and to output the signals to an unillustrated electronic control unit of the two-wheeled motor vehicle. In this manner, the accelerator-opening-degree sensor 25 and the magnet 24 are arranged inward of the spiral spring 20 in a radial direction thereof.

Next, a description is given of operations of the first embodiment.

When the accelerator grip G is rotated from the fully-closed position toward the full-opened position, the rotor 6 is also rotated together with the accelerator grip G, accompanying the magnet 24. In addition, the output voltages from the hall elements 26, 26 of the accelerator-opening-degree sensor 25 provided to the sensor case 5 are changed in accordance with the change of the rotation angle of the magnet 24, and the sensor circuit board 27 converts the changes of the output voltages from the hall elements 26, 26 into signals and outputs the signals to the unillustrated electronic control unit. The electronic control unit having received the signals controls operations of an electric throttle valve, a fuel injection valve, an ignition device, and the like of an engine in the same manner as in the conventional manner.

In addition, with the rotation of the accelerator grip G from the fully-closed position toward the full-opened position, the spiral spring 20 is wound up and concurrently increases a repulsive force. The spiral spring 20 is held in the narrow portion 12a of the spring-accommodating groove 12 accommodating the spiral spring 20, in the state where multiple portions of the resilient belt-shaped plate of the spiral spring 20 are stacked to be always in sliding contact with each other. Thus, wherever the accelerator grip G is set in the operating range from the fully-closed position to the fully-opened position, friction resistance of the spiral spring 20 is generated in the narrow portion 12a. Thereby, a hysteresis characteristic in operation load, making a difference in operation load between an opening operation and a closing operation of the accelerator grip G is obtained, which can always provide a favorable operation feeling of the accelerator grip G.

Moreover, since the hysteresis characteristic can be obtained in this manner with the spiral spring 20, itself, that is, the return spring, there is no need for special-hysteresis-generation-means, and the structure of the accelerator-opening-degree detection device D can be simplified.

Further, the accelerator-opening-degree sensor 25 including the hall elements 26, 26 and the sensor circuit board 27 and the magnet 24 are arranged in a dead space inward of the spiral spring 20 in the radial direction, which provides favorable efficiency of using space in the sensor case 5. Thus, the sensor case 5 and further the accelerator-opening-degree detection device D can be made compact.

In assembling the accelerator-opening-degree detection device D, the spiral spring 20 is accommodated in the sensor case 5, and thereafter the opening end of the sensor case 5 is closed with the flange 6b of the rotor 6. Subsequently, the case cover 7 is fitted on the outer peripheral surface of the sensor case 5, and then the outer side surface of the flange 6b of the rotor 6 is held by the holding wall 7a of the case cover 7. At this time, the locking claws 18 of the case cover 7 are snapped into engagement with the locking recess portions 19 of the sensor case 5, and thereby the accelerator-opening-degree detection device D formed in such a manner that the rotor 6 is rotatably accommodated in the inner space between the sensor case 5 and the case cover 7 can be formed into an assembly. Thus, the accelerator-opening-degree detection device D can be attached to the steering handle H at a time.

Moreover, since the accelerator-opening-degree detection device D is accommodated in the switch case 1 fixedly attached to the steering handle H, damage to the accelerator-opening-degree detection device D due to contact with another object can be prevented. In addition, the switch case 1 is divided into the pair of case halves 1a, 1b in the radial direction of the steering handle H, and the case halves 1a, 1b are fixedly attached to the steering handle H while being bolted together. Thus, the accommodating of the accelerator-opening-degree detection device D in the switch case 1 can be performed easily.

Moreover, the switch case 1 and the sensor case 5 are respectively provided with the positioning hole 11 and the positioning protrusion 10 which are engaged with each other to hinder the sensor case 5 from rotating. Thus, the rotation prevention of the sensor case 5 can be easily performed.

Further, there is a play in the portion where the hub 6a of the rotor 6 is fitted in the grip pipe 2 with the spline 17 placed in between. Thus, even if there is some manufacturing error between the accelerator-opening-degree detection device D and the accelerator grip G, deflection of the steering handle H, or the like, the error or the deflection is solved due to the play. Thus, the rotation transmission between the accelerator grip G and the rotor 6 can always be performed smoothly.

Next, a description is given of a second embodiment not being part of the present invention shown in FIG. 4.

In the second embodiment, the guide groove 14 and a spring-accommodating groove 30 are defined between the hub 5a and the case tube 5b of the sensor case 5. The guide groove 14 and the spring-accommodating groove 30 are arc-shaped and opposed to each other with a diameter line of the sensor case 5 located in between. The hub 5a and the case tube 5b are integrally joined by a pair of partition walls 5d, 5e shared with the arc-shaped guide groove 14 and the spring-accommodating groove 30. The movable protrusion 15 of the rotor 6 is arranged in the guide groove 14 in the same manner as in the former embodiment.

A fixed spring seat 30a is formed on one end face of the spring-accommodating groove 30. A protrusive movable spring seat 33 protruding into the arc-shaped spring-accommodating groove 30 is formed in the rotor 6 in such a manner as to be opposed to the fixed spring seat 30a. A wave spring 32 provided in a compressed state is accommodated as a return spring between the fixed spring seat 30a and the movable spring seat 33. In the accommodation, the wave spring 32 is curved in arc due to the arc-shaped spring-accommodating groove 30, and thereby an outer peripheral surface of the wave spring 32 is always in pressure contact with an inner side surface, of the arc-shaped spring-accommodating groove 30, on the outer peripheral side. The accelerator-opening-degree sensor 25 and the magnet 24 are arranged on the opposite side from the arc-shaped spring-accommodating groove 30 across the center of the sensor case 5.

Since the configuration of the other components is the same as in the former embodiment, components corresponding to those in the former embodiment are denoted by the same reference numerals, and overlapping description is omitted.

According to the second embodiment, the wave spring 32 serving as the return spring is always in pressure contact with the inner side surface of the arc-shaped spring-accommodating groove 30 on the outer peripheral side. Thus, when the wave spring 32 is compressed or expanded in accordance with an opening or closing operation of the accelerator grip G, friction resistance is generated between the wave spring 32 and the inner side surface of the arc-shaped spring-accommodating groove 30 on the outer peripheral side. Thereby, a hysteresis characteristic in operation load, making a difference in operation load between the opening operation and the closing operation of the accelerator grip G is obtained, which can always provide a favorable feeling in operating the accelerator grip G. In addition, since the hysteresis characteristic can be obtained with the wave spring 32 itself, that is, the return spring also in the second embodiment, there is no need for spccial-hysteresis-generation-means, and the structure of the accelerator-opening-degree detection device D can be simplified.

In the second embodiment, use of a coil spring instead of the wave spring 32 can provide the same operations and effects.

The present invention is not limited to the aforementioned embodiments, and various design changes can be made without departing from the scope of the present invention according to claim 1. For example, in the aforementioned embodiments, the pair of the hall elements 26 are provided to enhance the reliability of the accelerator-opening-degree sensor 25. Alternatively, a single hall element 26 may be provided. In addition, the present invention is applicable to a vehicle other than the two-wheeled motor vehicle as long as the vehicle is provided with a bar-shaped steering handle. Of course, the present application is applicable to an electric vehicle.

An accelerator-opening-degree detection device for a vehicle includes: a sensor case (5) fixed to a bar-shaped steering handle (H); a rotor (6) arranged adjacent to the sensor case (5), the rotor being coupled with an accelerator grip (G); an accelerator-opening-degree sensor (25) accommodated and held in the sensor case (5), the accelerator-opening-degree sensor configured to detect a rotation angle of the rotor (6); and a return spring configured to urge the rotor (6) toward an initial position. A spiral spring (20) is accommodated in an annular spring-accommodating groove (12) formed in the sensor case (5). In order to form the return spring by the spiral spring (20), an end of the spiral spring (20) on an outer periphery and an end thereof on an inner periphery are respectively locked with the sensor case (5) and the rotor (6), and a narrow portion (12a) is provided in the spring-accommodating groove (12), a resilient belt-shaped plate of the spiral spring (20) being held in the narrow portion (12a) in a state where portions of the resilient belt-shaped plate in the narrow portion (12a) are stacked to be always in slidable contact with each other. Accordingly, it is possible to obtain a favorable acceleration operation feeling over the entire operating range of an accelerator grip while special-hysteresis-generation-means is not provided.

## Claims

1. An accelerator-opening-degree detection device for a vehicle, including: a sensor case (5) fixed to a bar-shaped steering handle (H); a rotor (6) arranged adjacent to the sensor case (5), the rotor being coupled with an accelerator grip (G) rotatably provided to the steering handle (H); an accelerator-opening-degree sensor (25) accommodated and held in the sensor case (5), the accelerator-opening-degree sensor configured to detect a rotation angle from an initial position of the rotor (6); and a return spring connected to and between the sensor case (5) and the rotor (6), the return spring configured to urge the rotor (6) toward the initial position, wherein
an annular spring-accommodating groove (12) surrounding the steering handle (H) is formed in the sensor case (5),
a spiral spring (20) formed by winding a resilient belt-shaped plate a plurality of times is accommodated in the spring-accommodating groove (12), and
in order to form the return spring by the spiral spring (20), an end of the spiral spring (20) on an outer periphery and an end thereof on an inner periphery are respectively locked with the sensor case (5) and the rotor (6), **characterized in that**
a narrow portion (12a) is provided in the spring-accommodating groove (12), the resilient belt-shaped plate of the spiral spring (20) being held in the narrow portion (12a) in a state where portions of the resilient belt-shaped plate in the narrow portion (12a) are stacked to be always in slidable contact with each other.

2. The accelerator-opening-degree detection device for a vehicle according to claim 1,
wherein the accelerator-opening-degree sensor (25) is arranged inward of the spiral spring (20) in a radial direction thereof.

3. The accelerator-opening-degree detection device for a vehicle according to any one of claims 1 to 2, wherein
the rotor (6) comprises a flange (6b) closing an opening end of the sensor case (5),
a case cover (7) is formed by a holding wall (7a) and an outer tube (7b), an outer side surface of the flange (6b) being held by the holding wall (7a), the outer tube (7b) continuously provided to an outer peripheral end of the holding wall (7a) and fitted on an outer peripheral surface of the sensor case (5), and
locking portions (18, 19) to be snapped into engagement with each other to couple the case cover (7) and the sensor case (5) together are provided to the outer tube (7b) and the sensor case (5), respectively.

4. The accelerator-opening-degree detection device for a vehicle according to any one of claims 1 to 3, wherein
a switch case (1) is fitted to the steering handle (H) to be adjacent to an inner end side of the accelerator grip (G), and is divided into a pair of case halves (1a, 1b) along a radial direction of the steering handle (H), the case halves (1a, 1 b) are bolted together and fixedly attached to the steering handle (H),
the sensor case (5) and the rotor (6) are accommodated in the switch case (1), and
a positioning protrusion (10) and a positioning hole (11) which are engaged with each other to hinder the sensor case (5) from rotating are provided to the sensor case (5) and the switch case (1), respectively.

## Patentansprüche

1. Gasöffnungsgraderfassungsvorrichtung für ein Fahrzeug, welche enthält: ein Sensorgehäuse (5), das an einer stabförmigen Lenkstange (H) befestigt ist; einen Rotor (6), der benachbart dem Sensorgehäuse (5) angeordnet ist, wobei der Rotor mit einem an der Lenkstange (H) drehbar vorgesehenen Gasgriff (G) gekoppelt ist; einen Gasöffnungsgradsensor (25), der in dem Sensorgehäuse (5) aufgenommen und gehalten wird, wobei der Gasöffnungsgradsensor konfiguriert ist, um einen Drehwinkel von einer Anfangsstellung des Rotors (6) zu erfassen; und eine Rückstellfeder, die mit und zwischen dem Sensorgehäuse (5) und dem Rotor (6) verbunden ist, wobei die Rückstellfeder konfiguriert ist, um den Rotor (6) zur Anfangsstellung hin vorzuspannen, worin eine ringförmige Federaufnahmenut (12), welche die Lenkstange (H) umgibt, in dem Sensorgehäuse (5) ausgebildet ist,
eine Spiralfeder (50), die durch mehrmaliges Aufwickeln eines elastischen bandförmigen Blechs gebildet ist, in der Federaufnahmenut (12) aufgenommen ist, und
um die Rückstellfeder durch die Spiralfeder (20) zu bilden, ein Ende der Spiralfeder (20) am Außenumfang und ein Ende davon am Innenumfang jeweils mit dem Sensorgehäuse (5) und dem Rotor (6) gekoppelt sind, **dadurch gekennzeichnet, dass**
ein schmaler Abschnitt (12a) in der Federaufnahmenut (12) vorgesehen ist, wobei das elastische bandförmige Blech der Spiralfeder (20) in dem schmalen Abschnitt (12a) in einem Zustand gehalten wird, wo Abschnitte des elastischen bandförmigen Blechs in dem schmalen Abschnitt (12a) immer in Gleitkontakt aufeinanderliegen.

2. Die Gasöffnungsgraderfassungsvorrichtung für ein Fahrzeug nach Anspruch 1, worin der Gasöffnungsgradsensor (25) in radialer Richtung innerhalb der Spiralfeder (20) angeordnet ist.

3. Die Gasöffnungsgraderfassungsvorrichtung für ein Fahrzeug nach einem der Ansprüche 1 bis 2, worin
der Rotor (6) einen Flansch (6b) aufweist, der ein offenes Ende des Sensorgehäuses (5) verschließt,
ein Gehäusedeckel (7) durch eine Haltewand (7a) und ein Außenrohr (7b) gebildet ist, wobei eine Außenoberfläche des Flanschs (6b) durch die Haltewand (7a) gehalten wird, wobei das Außenrohr (7b) kontinuierlich zum Außenumfangsende der Haltewand (7a) vorgesehen und an einer Außenumfangsfläche des Sensorgehäuses (5) angebracht ist, und
Arretierabschnitte (18, 19) zum Einschnappen in Eingriff miteinander, um den Gehäusedeckel (7) und das Sensorgehäuse (5) miteinander zu koppeln, jeweils am Außenrohr (7b) und dem Sensorgehäuse (5) vorgesehen sind.

4. Die Gasöffnungsgraderfassungsvorrichtung für ein Fahrzeug nach einem der Ansprüche 1 bis 3, worin
ein Schaltergehäuse (1) an der Lenkstange (H) benachbart einer inneren Endseite des Gasgriffs (G) angebracht ist und entlang einer radialen Richtung der Lenkstange (H) in ein Paar von Gehäusehälften (1a, 1b) unterteilt ist, wobei die Gehäusehälften (1a, 1b) miteinander verbolzt und an der Lenkstange (H) fest angebracht sind,
das Sensorgehäuse (5) und der Rotor (6) in dem Schaltergehäuse (1) aufgenommen sind, und
ein Positionierungsvorsprung (10) und ein Positionierungsloch (11), die miteinander in Eingriff stehen, um eine Verdrehung des Sensorgehäuses (5) zu verhindern, jeweils an dem Sensorgehäuse (5) und dem Schaltergehäuse (1) vorgesehen sind.

## Revendications

1. Un dispositif de détection du degré d'ouverture d'un accélérateur pour un véhicule, comprenant : un boîtier de capteur (5) fixé à un guidon en forme de barre (H) ; un rotor (6) disposé à côté du boîtier du capteur (5), le rotor étant couplé à une poignée d'accélérateur (G) disposée à rotation sur le guidon (H) ; un capteur du degré d'ouverture de l'accélérateur (25) disposé et maintenu dans le boîtier du capteur (5), le capteur du degré d'ouverture de l'accélérateur étant configuré pour détecter un angle de rotation à partir d'une position initiale du rotor (6) ; et un ressort de retour raccordé au boîtier du capteur (5) et au rotor (6) et entre eux, le ressort de retour étant conçu pour presser le rotor (6) vers la position initiale, dans lequel :
une rainure de logement d'un ressort annulaire (12) entourant le guidon (H) est formée dans le boîtier du capteur (5),
un ressort spiralé (20) formé par enroulement d'une plaque en forme de courroie élastique à plusieurs reprises est logé dans la rainure de logement du ressort (12) et afm de former le ressort de retour par le ressort spiralé (20) une extrémité du ressort spiralé (20) sur une périphérie externe et une extrémité de celui-ci sur une périphérie interne sont respectivement verrouillées avec le boîtier du capteur (5) et le rotor (6), **caractérisé en ce**
**qu'**une partie étroite (12a) est prévue dans la rainure de logement du ressort (12), la plaque en forme de courroie élastique du ressort spiralé (20) étant maintenue dans la paroi étroite (12a) dans un état dans lequel les parties de la plaque en forme de courroie élastique dans la partie étroite (12a) sont empilées pour être toujours en contact coulissant l'une avec l'autre.

2. Le dispositif de détection du degré d'ouverture d'un accélérateur pour un véhicule selon la revendication 1,
dans lequel le capteur du degré d'ouverture de l'accélérateur (25) est disposé vers l'intérieur du ressort spiralé (20) dans une direction radiale de celui-ci.

3. Le dispositif de détection du degré d'ouverture de l'accélérateur pour un véhicule selon l'une des revendications 1 à 2, dans lequel
le rotor (6) comprend une bride (6b) fermant une extrémité d'ouverture du boîtier du capteur (5),
un cache de boîtier (7) est formé par une paroi de retenue (7a) et un tube extérieur (7b), une surface latérale extérieure de la bride (6b) étant retenue par la paroi de retenue (7a), le tube extérieur (7b) étant disposé en continu sur une extrémité périphérique externe de la paroi de retenue (7a) et fixé sur une surface périphérique externe du boîtier de capteur (5) et
des parties de verrouillage (18,19) à encliqueter l'une avec l'autre pour coupler ensemble le cache du boîtier (7) et le boîtier du capteur (5) sont respectivement prévues sur le tube extérieur (7b) et le boîtier du capteur (5).

4. Le dispositif de détection du degré d'ouverture de l'accélérateur pour un véhicule selon l'une des revendications 1 à 3, dans lequel
un boîtier de commutation (1) est fixé au guidon (H) pour se trouver adjacent à un côté d'extrémité intérieur de la poignée de l'accélérateur (G) et est divisé en une paire de demi-boîtiers (1a, 1b) le long d'une direction radiale du guidon (H),
les demi-boîtiers (1a, 1b) sont boulonnés l'un à l'autre et fixés à demeure au guidon (H), le boîtier du capteur (5) et le rotor (6) sont logés dans le boîtier de commutation (1) et une saillie de positionnement (10) et un orifice de positionnement (11) qui sont engagés l'un avec l'autre pour empêcher le boîtier du capteur (5) de tourner sont respectivement prévus sur le boîtier du capteur (5) et le boîtier de commutation (1).
